# EUROPÄISCHE PATENTSCHRIFT

(11) **EP 0 959 509 B1**
(45) Veröffentlichungstag und Bekanntmachung des Hinweises auf die Patenterteilung: **08.01.2003**
(21) Anmeldenummer: 99104348.0
(22) Anmeldetag: 04.03.1999
(51) Int. Cl.: H01M 4/68

(54) **Elektrodengitter für Bleiakkumulatoren**
Electrode grid for lead-acid battery
Grille d'électrode pour batterie acide au plomb

(30) Priorität: 23.05.1998 DE 19823147
(43) Veröffentlichungstag der Anmeldung: 24.11.1999
(73) Patentinhaber: VB Autobatterie GmbH, 30419 Hannover (DE)
(72) Erfinder: Bauer, Jürgen, Dr., 31141 Hildesheim (DE); Standke-Thiemann, Christine, Dr., 30519 Hannover (DE); Tönnessen, Albert, Dr., 51465 Bergisch-Gladbach (DE)
(74) Vertreter: Lins, Edgar, Dipl.-Phys. Dr.jur.

(56) Entgegenhaltungen:
- EP-A- 0 655 792
- GB-A- 712 798
- GB-A- 817 885
- GB-A- 1 575 811
- US-A- 5 298 350
- US-A- 5 691 087
- PATENT ABSTRACTS OF JAPAN vol. 010, no. 075 (E-390), 25. März 1986 -& JP 60 220561 A (FURUKAWA DENCHI KK;OTHERS: 01), 5. November 1985
- PATENT ABSTRACTS OF JAPAN vol. 005, no. 091 (E-061), 13. Juni 1981 -& JP 56 036866 A (JAPAN STORAGE BATTERY CO LTD), 10. April 1981
- PATENT ABSTRACTS OF JAPAN vol. 006, no. 151 (E-124), 11. August 1982 -& JP 57 074973 A (JAPAN STORAGE BATTERY CO LTD), 11. Mai 1982
- PATENT ABSTRACTS OF JAPAN vol. 005, no. 133 (E-071), 25. August 1981 -& JP 56 069774 A (JAPAN STORAGE BATTERY CO LTD), 11. Juni 1981
- PATENT ABSTRACTS OF JAPAN vol. 011, no. 367 (E-561), 28. November 1987 -& JP 62 139275 A (JAPAN STORAGE BATTERY CO LTD), 22. Juni 1987
- PATENT ABSTRACTS OF JAPAN vol. 005, no. 086 (E-060), 5. Juni 1981 -& JP 56 032679 A (SHIN KOBE ELECTRIC MACH CO LTD), 2. April 1981
- DATABASE WPI Section Ch, Week 7925 Derwent Publications Ltd., London, GB; Class L03, AN 79-46321B XP002106577 -& JP 54 058624 A (YUASA BATTERY CO LTD) , 11. Mai 1979

## Beschreibung

Gegenstand der Erfindung ist ein Elektrodengitter für Bleiakkumulatoren, bestehend aus einer Bleilegierung, die neben Calcium urd Zinn und gegebenenfalls Silber geringe Mengen an Aluminium enthält und die Verwendung des Elektrodengitters.

Mechanische Stabilität und gute Korrosionsfestigkeit sind wesentliche Anforderungen an Elektrodengitter für Bleiakkumulatoren um fehlerfreie Batteriemontage und adäquate Lebensdauer auch bei starker Beanspruchung - z.B. den ständig steigenden Temperaturen, denen Starterbatterien im Motorraum von Kraftfahrzeugen ausgesetzt sind - zu gewährleisten.

Elektrodengitter, die im Schwerkraftgußverfahren hergestellt werden, können aber grundsätzlich die typischen Gußdefekte wie Innenlunker und Warmriß aufweisen. Die Vermeidung dieser Gußfehier ist neben der Auswahl geeigneter Legierungen entscheidend für die Qualität des Gitters mit Blick auf fehlerfreie Fertigung und Lebensdauer der Batterie. In der industriellen Praxis ist daher die Herstellbarkeit rißfreier Gußgitter eine notwendige Bedingung und entscheidet mit über die Einsetzbarkeit von Bleilegierungen insbesondere für Starter-Batterien. Legierungen, die sich zwar durch gutes Korrosionsverhalten auszeichnen, aber nicht zu rißfreien Elektrodenträgern verarbeiten lassen, scheiden für die praktische Anwendung aus.

Beim üblicherweise für die Herstellung von Gittern eingesetzten Schwerkraftguß wird eine Gittergießform in kurzer Zeit mit einer Bleischmelze gefüllt, deren Temperatur typischerweise im Bereich 480 - 510°C liegt. Die Formtemperatur liegt in der Regel im Bereich 150 - 200 °C. Nach dem Eingießen muß der Wärmeinhalt der Schmelze über die mit Schlichte beschichteten Formwände in cen Formkörper abgegeben werden, bis das Gitter vollständig erstarrt und ausreichend weit abgekühlt ist, um es entnehmen zu können.

Für die typischen Geometrien der Elektrodengitter, die durch stark unterschiedliche Querschnitte in den Steg- und Rahmenbereichen gekennzeichnet sind, verläuft die Abkühlung in der Form mit lokai stark variierender Rate, so daß nach kurzer Zeit bereits vollständig erstarrte neben noch teilweise schmelzflüssigen Bereichen vorliegen. Mechanische Spannungen. die durch die ungleichmäßige Abkühlung und die Volumenkontraktion bei der Erstarrung entstehen, können daher bei Legierungen ab einem bestimmten Erstarrungsintervall leicht zur Bildung von Warmrissen führen. Die Neigung zur Ausbildung von Warmrissen kann dabei zusätzlich durch Bildung niedrigschmelzender Phasen an den Korngrenzen begünstigt werden und ist grundsätzlich für grobkörnig erstarrende Legierungen problematischer als für feinkörnig erstarrende Legierungen.

Der Zwang zur vollständigen Vermeidung von Warmrissen ergibt sich durch die Auswirkungen auf die Verarbeitbarkeit der Elektrodengitter in der Batteriemontage, auf die elektrische Leitfähigkeit und insbesondere auf die zu erwartende Lebensdauer der positiven Gitter, die ständiger Korrosionsbeanspruchung standhalten müssen.

Die mechanischen Belastungen bei den Fertigungsschritten Pastierung, Trocknung und Montage können Gitter mit Warmrisser oder gar vollständig durchtrennten Stegen oder Rahmen zerstören oder so verformen, daß die Batterie z.B. durch Kurzschlußbildung frühzeitig ausfallen kann. Die elektrische Leitfähigkeit der Elektrodengitter beider Polaritäten bestimmt in starkem Maß die Leistung der Batterie im Einsatz und kann insbesondere durch Rißbildung im Rahmen und besonders in Nähe der Fahne entscheidend beeinträchtigt werden. Gießfehler in diesen Bereichen können unter keinen Umständen toleriert werden.

Die Gitter in positiven Elektroden sind durch das anstehende Potential einem ständigen Korrosionsangriff ausgesetzt, der vor allem mit Blick auf hohe Einsatztemperaturen höchste und ständig steigende Anforderungen an die mechanische Integrität und die Korrosionsbeständigkeit der Gitter stellt. Auch kleine Gußfehler werden durch die Korrosion schnell ausgeweitet und bedrohen die Leitfähigkeit und die Lebensdauer der positiven Elektrodengitter. Es ist daher unumgänglich neben der Verwendung sehr gut korrosionsstabiler Bleilegierungen ausschließlich stabile rißfreie Gitter n positiven Elektroden zu verwenden.

Für die Elektrodengitter von wartungsfreien Bleiakkumulatoren werden in großem Umfang Blei-Calcium-Zinn-Legierungen verwendet. Sowohl für den Calciumgehalt als auch für Zinngehalt sind weite Anwendungsbereiche bekannt, insbesondere ist der deutschen Patentanmeldung 2758940 eine aushärtbare Blei/Calciumlegierung zu entnehmen, bei der das relative Zinn/Calcium-Atomverhältnis mindestens 3:1 beträgt und der Calciumgehalt zwischen 0.02 und 0,1 Gew.% liegt. Bevorzugt liegt der Calciumgehalt dieser bekannten Legierung bei ca. 0,06 Gew.% und zusätzlich hat es sich gemäß dieser Druckschrift als vorteilhaft erwiesen, einer Blei/Calciumlegierung einen Silberzusatz zwischen 0,02 bis 0.1%, vorzugsweise ca. 0,06% hinzuzufügen.

Die gleiche Legierungstype wird auch im US-Patent 5298350 und im US-Patent 5691087 beschrieben. In diesen Druckschriften finden sich weitere Angaben über die vorteilhaften Wirkungen des in der deutschen Patentanmeldung 2758940 bereits angeführten Silberzusatzes.

Bei Blei/Calciumlegierungen ist es darüber hinaus Stand der Technik, beim Gießen der Legierung Aluminiumzusätze zu verwenden. Dabei wird der anfänglichen Legierungszusammensetzung beispielsweise 0.08 bis 0.012% Aluminium zugegeben, wobei die Menge an zugegebenem Aluminium von der Schmelztemperatur beim Gießverfahren abhängig ist. Diese Aluminiumzugabe soll dazu diener, eine passivierende Schutzschicht auf der Oberfläche der Bleischmelze zu bilden und som t eine Oxidation des Calciums bzw. einen Calciumabbrand zu verringern.

Wie im US-Patent 5691087 ausgeführt ist, wird davon ausgegangen, daß die kleine Menge an Aluminium, die hinzugefügt wird, die Korrosionsbeständigkeit von Gittern, die aus solchen Legierungen gegossen werden, nicht beeinträchtigt. Neben Aluminium kann gemäß den Aussagen dieses Patents auch jedes beliebige andere Material verwendet werden, welches in der Schmelze als Sauerstoff-Fänger geeignet ist. Bei der Herstellung und Untersuchung von Gittern auf Basis der genannten Legierungen zeigte es sich, daß sie nicht in allen Fällen eine für den Praxiseinsatz ausreichende Korrosionsbeständigkeit und Zuverlässigkeit aufweisen. weil gelegentlich auftretende Risse die zu erwartende Performance beeinträchtigen.

Die bekannten Blei - Calcium - Zinn - Silber Legierungen erfüllen grundsätzlich die Anforderungen an die Korrosionsbeständigkeit zur Verwendung in positiven Elektroden, sind aber nur dann tatsächlich mit Vorteilen für Batteriequalität und Batterielebensdauer einsetzbar, wenn es gelingt, mit den üblichen Fertigungsmethoden rißfreie Gitter herzustellen.

Aufgabe der Erfindung ist es, eine Legierung für Elektrodengitter für Bleiakkumulatoren anzugeben. die sich einerseits problemlos gießen läßt und die andererseits hervorragende Eigenschaften hinsichtlich ihrer Korrosionsbeständigkeit besitzt.

Diese Aufgabe wird bei einem Elektrodengitter der eingangs genannten Art dadurch gelöst, daß die Legierung einen Aluminiumgehalt von mindestens 0,012% besitzt und daß der Aluminiumgehalt so eingestellt ist, daß die mittlere Korngröße des Gefüges in den Stegen und im Rahmen des Gitters auf 200 µm - 600 µm beschränkt bleibt. Für typische Stegdurchmesser von 0,8 - 1,2 mm und Rahmenbreiten von 1,5-5 mm in Elektrodengittern für Starterbatterien entspricht dies etwa 4 - 25 Körnern im Querschnitt durch das jeweilige Gitterelement. Durch diese Maßnahme wird die erhöhte Neigung zur Warmrißbildung im grobkörnigen Erstarrungsgefüge, das sich in Gitern aus den genannten Legierungen mit einem Atomverhältnis Sn:Ca > 3:1 bei der Erstarrung einstellt, herabgesetzt.

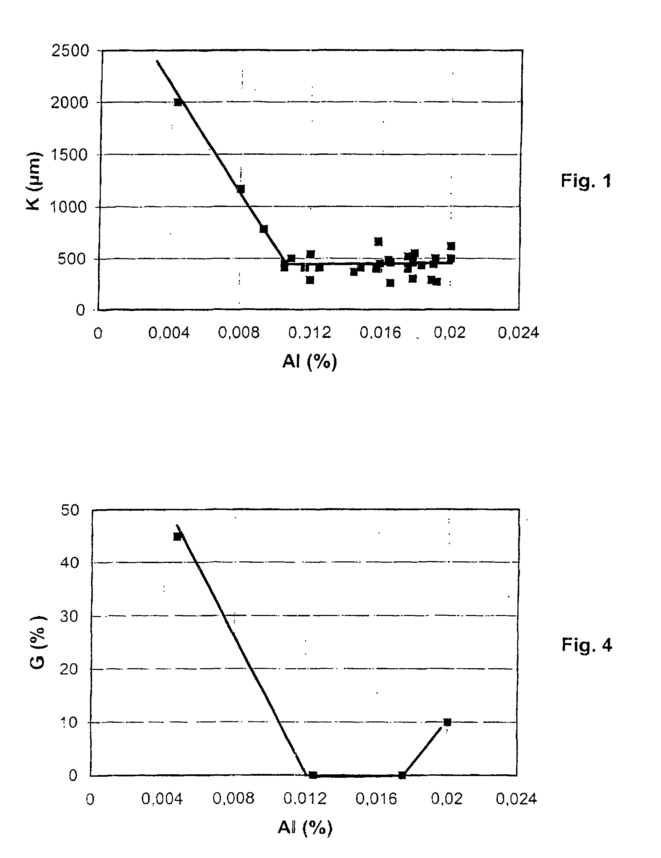

Der erfindungsgemäße Zusammenhang zwischen Korngröße und Aluminiumgehalt der Legierung ist in Figur 1 näher dargestellt.

In dieser Figur ist die Korngröße (K) im Rahmen gegossener Elektrodengitter in Abhängigkeit vom Aluminiumgehalt (Al) aufgetragen. Es zeigt sich, daß zwischen Aluminiumgehalt und Korngröße der gegossenen Legierung ein überraschend deutlicher Zusammenhang besteht. Um somit ein möglichst rißfreies und damit ein mechanisch stabiles und korrosionsfestes Elektrodengitter zu erhalten, ist es vorteilhaft, die mittlere Korngröße so einzustellen, daß auf einen Steg- oder Rahmendurchmesser mindestens 4 bis ca. 25 Körner entfallen. Erfindungsgemäß ist es möglich, diese Korngröße durch gezielte Einstellung des Aluminiumgehalts im fertigen Gitter zu erzielen. Entgegen der bisherigen Verwendung von Al lediglich zur Vermeidung von Ca- Verlusten beim Schmelz- und Gießvorgang wird dabei Al gezielt zu Veränderung der Gefügestruktur mit dem Ziel der Vermeidung von Rißbildung eingebracht.

Vorteilhafterweise liegt der Aluminiumgehalt bei ca. 0,014%, der Aluminiumgehalt im Elektrodengitter sollte 0,02 Gew.% nicht überschreiten.

Der Calciumgehalt erfindungsgemäßer Legierungen liegt zwischen 0,04 und 0,06%, der Zinngehalt zwischen 0,5 und 1,0%, vorzugsweise zwischen 0,5 und 0,7%. Der Gehalt an Silber sollte zwischen 0.01 bis 0,06% betragen und vorteilhafter Weise bei ca. 0.03% liegen.

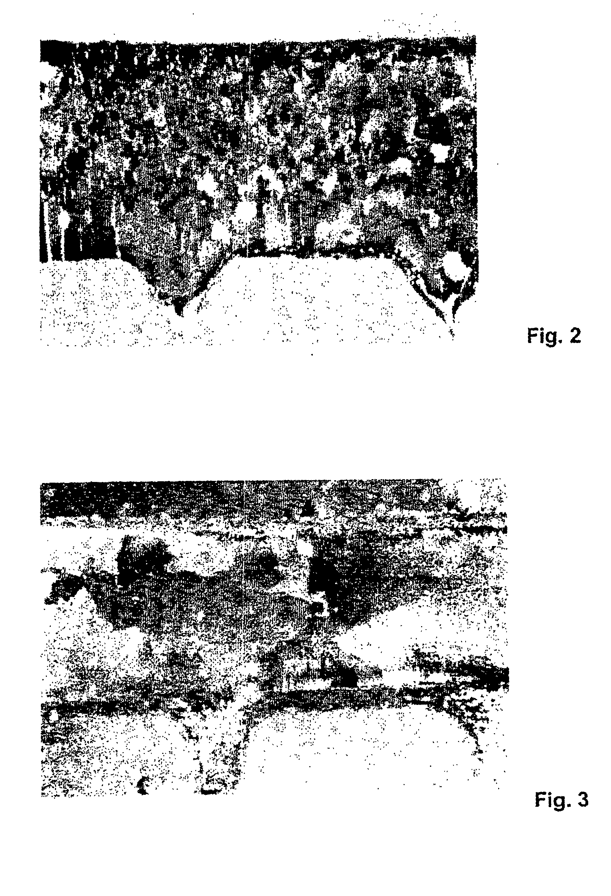

Die Figuren 2 und 3 zeigen Schliffbilder (Vergrößerung ca. 9:1) von Blei/Calciumlegierungen, wobei Figur 2 ein Schliffbild einer Legierung zeigt, die aus 0,054% Ca, 0,6% Sn, 0,03% Ag und 0.017 % Al (jeweiis Gewichtsprozent) besteht, während Figur 3 eine Legierung mit den Komponenten 0,051% Ca. 0,64 % Sr, 0,03 % Ag und 0,0047 % Al zeigt. Wie aus den Figuren ersichtlich, ergibt sich für Legierung 2 eine deutlich geringere Korngröße von nur 250 µm im Rahmen als für eine Legierung gemäß Figur 3 mit einer Korngröße von 2000 µm. Legierung 2 mit erhöhtem Al Gehalt läßt somit eine wesentlich geringere Neigung zur Warmrißbildung erwarten und ist damit grundsätzlich besser zur Herstellung von Elektrodengittern geeignet,

Dieser überraschenderweise vorteilhafte Einfluß von Aluminium auf die Eigenschaften des Elektrodengitters zeigt sich deutlich im Ergebnis einer Rißauszählung an repräsentativen Fertigungslosen typischer Batteriegitter aus einer Serie von Gießversuchen mit Legierungen der obengenannten Zusammensetzungen. In Figur 4 ist die Häufigkeit des Auftretens von Rahmenbrüchen des Gitters (G) gegen den im Gitter vorhandenen Al-Gehalt (Al) aufgetragen. Es ist deutlich zu erkennen, daß rur Al Gehalte im Gitter von mehr als 0,012 Gew.-% eine sichere Vermeidung von Warmrißbildung gewährleisten. Der leichte Anstieg bei Verwendung sehr hoher Al - Gehalte könnte durch Bildung ungünstiger niedrigschmelzender Phasen unter Beteiligung von Al entstehen, die dann die zunächst günstige Wirkung von Al wieder aufheben.

Diese Ergebnisse zeigen, daß neben dem Einfluß von Al auf die Korngröße tatsächlich auch die Herstellung rißfreier Gitter aus den genannten Legeirungen allein durch Kontrolle des Al Gehaltes ermöglicht werden kann. Die erfindungsgemäße Verwendung hoher Al-Gehalte ergibt somit eine signifikante Verbesserung der Gußqualität und damit eine Verbesserung der Zuverlässigkeit und der Lebensdauer der Bleibatterie.

## Patentansprüche

1. Elektrodengitter für Bleiakkumulatoren bestehend aus einer Bleilegierung, die neben Calcium und Zinn und gegebenenfalls Silber geringe Mengen an Aluminium enthält, **dadurch gekennzeichnet, daß** der Aluminiumgehalt mindestens 0,012% beträgt und so eingestellt ist, daß der mittlere Korndurchmesser 200 µm - 600 µm beträgt.

2. Elektrodengitter nach Anspruch 1, **dadurch gekennzeichnet, daß** der Aluminiumgehalt mindestens 0,014% beträgt.

3. Elektrodengitter nach Anspruch 1 oder 2, **dadurch gekennzeichnet, daß** der Calciumgehalt zwischen 0,04 und 0,06% liegt.

4. Elektrodengitter nach einem der Ansprüche 1 bis 3, **dadurch gekennzeichnet, daß** der Zinngehalt 0,5 bis 1.0%, insbesondere 0,5 bis 0,7% beträgt.

5. Elektrodengitter nach einem der Ansprüche 1 bis 4, **dadurch gekennzeichnet, daß** der Silbergehalt zwischen 0,01 und 0,06% liegt.

6. Verwendung eines Elektrodengitters nach Anspruch 1 als positives Gitter in einem Bleiakkumulator.

## Claims

1. Electrode grid for lead storage batteries, comprising a lead alloy which, in addition to calcium and tin and, if appropriate, silver, contains small quantities of aluminium, **characterized in that** the aluminium content is at least 0.012% and is set to be such that the average grain diameter is 200 µm - 600 µm.

2. Electrode grid according to Claim 1, **characterized in that** the aluminium content is at least 0.014%.

3. Electrode grid according to Claim 1 or 2, **characterized in that** the calcium content is between 0.04 and 0.06%.

4. Electrode grid according to one of Claims 1 to 3, **characterized in that** the tin content is 0.5 to 1.0%, in particular 0.5 to 0.7%.

5. Electrode grid according to one of Claims 1 to 4, **characterized in that** the silver content is between 0.01 and 0.06%.

6. Use of an electrode grid according to Claim 1 as a positive grid in a lead storage battery.

## Revendications

1. °] Grille d'électrode pour batteries au plomb, composée d'un alliage de plomb contenant en plus du calcium et de l'étain et le cas échéant de l'argent, de faibles quantités d'aluminium,
**caractérisée en ce que**
la teneur en aluminium représente au moins 0,012 % et est réglée pour un diamètre moyen de grains de 200 µm-600 µm.

2. Grille d'électrode selon la revendication 1,
**caractérisée en ce que**
la teneur en aluminium représente au moins 0,014 %.

3. Grille d'électrode selon l'une quelconque des revendications 1 ou 2,
**caractérisée en ce que**
la teneur en calcium est comprise entre 0,04 et 0,06 %.

4. Grille d'électrode selon l'une quelconque des revendications 1 à 3,
**caractérisée en ce que**
la teneur en étain représente entre 0,5 et 1,0%, notamment 0,5 à 0,7 %.

5. Grille d'électrode selon l'une quelconque des revendications 1 à 4,
**caractérisée en ce que**
la teneur en argent est comprise entre 0,01 et 0,06 %.

6. Application d'une grille d'électrode selon la revendication 1, comme grille positive d'une batterie au plomb.
